# EUROPEAN PATENT APPLICATION

(11) **EP 2 942 962 A1**
(43) Date of publication of application: **11.11.2015**
(21) Application number: 14001634.6
(22) Date of filing: 08.05.2014
(51) Int. Cl.: H04N 19/164, H04L 29/06, H04N 19/132, H04N 19/31, H04N 21/234, H04N 21/647, H04W 28/10, H04W 72/12, H04N 19/172, H04L 12/801, H04L 12/851, H04L 12/841, H04L 12/823, H04L 29/08

(54) **Radio access network-based transmission control of layer-encoded media frames**

(71) Applicant: Telefonaktiebolaget L M Ericsson (Publ), 164 83 Stockholm (SE)
(72) Inventor: Kovács, Ákos, SE-16860 Stockholm (SE); Gódor, István, 1039 Budapest (HU); Rácz, Sándor, 2700 Cegléd (HU)
(74) Representative: Röthinger, Rainer

(57) **Abstract**

A technique for controlling transmission of layer-encoded media frames via a radio interface to a user terminal is presented. The layer-encoding defines a decoding-dependency of the media frames in terms of, for example, a base layer and one or more enhancement layers. A method implementation of the technique comprises receiving layer-encoded media frames at a radio access network and determining, at the radio access network, a decoding-dependency and a play-out sequence of the received media frames. The method further comprises identifying, from the media frame play-out sequence, a media frame for transmission via the radio interface and determining that the identified media frame is unavailable. In such a case, at least one media frame dependent from the unavailable media frame is identified from the media frame decoding-dependency, and the at least one dependent media frame is excluded from transmission via the radio interface.

## Description

### Technical Field

The present disclosure generally relates to radio access networks. In particular, a technique for controlling transmission of layer-encoded media frames via a radio interface is described. The technique can be implemented in the form of a method, a computer program, an access network node or a network system.

### Background

The amount of media data transmitted via radio access networks such as cellular telecommunications networks has tremendously increased in the last decade. As an example, video streaming has become a widespread application on smartphones, tablet computers and other wireless user terminals.

The large amount of media data generated by video streaming and similar applications leads to capacity issues in radio access networks. As such, network operators request technical solutions that permit a certain level of control over the media data delivered to wireless user terminals. Of course, such solutions need to properly consider network capacity and end user experience at the same time.

At present, mainly two types of media data delivery technologies are available for controlling media data transmission, in particular media data streaming. Those technologies are adaptive streaming and layer-encoding.

Adaptive Streaming (AS) technologies deliver media content in multiple chunks. Successive chunks may transport media data of different qualities (e.g., in terms of video resolution) dependent on the prevailing transmission conditions (e.g., in terms of available bandwidth). Content delivery via AS typically builds on the Hypertext Transfer Protocol (HTTP) and therefore is often referred to as HTTP-AS. DASH (Dynamic AS over HTTP) is one commonly used AS protocol.

HTTP-AS is a closed-loop solution in which the perceived quality is derived based on throughput measured from a media client perspective. The main adaptation algorithm of HTTP-AS is implemented on the media client. This client-centric implementation results in a greedy downloading behaviour without significant control options from the perspective of the transmission network (including, e.g., a radio access network). For gaining control over HTTP-AS-based media data transmission by a transmission network, one has to break the pure Over-The-Top (OTT) concept of HTTP-AS, which in its strict implementation prevents network interaction.

Layer-encoding, such as H.264 Scalable Video Coding (SVC), results in the transmission of media frames of different importance. The media frames are organized into multiple media layers, typically including a base layer and one or more higher (or enhancement) layers that are used to transport additional information. The additional information permits a higher quality media rendering at the media client compared to a rendering of the base layer information only. The User Datagram Protocol (UDP) is often used for real time video streaming of layer-encoded media data. The resulting delivery mechanism is an open-loop solution with resulting potential of network interaction and control.

The possibility of an open-loop control in connection with no particular reliance on (conflicting) control interventions from media clients makes layer-encoding a promising candidate for transmission network-based control of media data delivery. In this regard, media frames of higher importance could be handled at a higher Quality of Service (QoS) level in the transmission network.

QoS-enabled transmission networks, such as DiffServ networks, resolve network congestion by delaying or dropping lower priority packets first to maintain a target QoS for higher priority packets. Media frames of higher importance, such as base layer frames, could thus be delivered in packets of a higher priority than packets used to deliver frames of lower importance, such as higher layer frames. As a result, packets of lower priority with higher layer frames will suffer from increased jitter and delay, or will even be dropped.

When packets used to deliver higher layer frames are delayed, or dropped, in the transmission network, a waste of transmission resources can result for various reasons. The transmitted media frames are typically buffered at the client side for a frame re-ordering and to compensate for network jitter. Buffered media frames will, however, be discarded at the client side upon a buffer overflow or when an associated lower-layer frame was lost (e.g., dropped at the transmission network). Buffer overflows are more likely to occur when the transmission network intentionally delays delivery of higher-layer frames.

As will be appreciated, the waste of transmission resources resulting from successfully delivered discarding media frames is a particular issue for radio access networks because of the associated bandwidth limitations.

### Summary

There is need for a technique that permits an efficient transmission of layer-encoded media frames via a radio interface.

According to one aspect, a method of controlling transmission of layer-encoded media frames via a radio interface to a user terminal is provided, wherein the layer-encoding defines a decoding-dependency of the media frames. The method comprises receiving layer-encoded media frames at a radio access network and determining, at the radio access network, a decoding-dependency and a play-out sequence of the received media frames. The method further comprises identifying, from the media frame play-out sequence, a media frame for transmission via the radio interface. Still further, the method comprises determining that the identified media frame is available, and identifying, from the media frame decoding-dependency, at least one media frame dependent from the unavailable media frame. The method also comprises excluding the at least one dependent media frame from transmission via the radio interface.

In one variant, the decoding-dependency of the media frames may be defined by a coding layer an individual media frame belongs to. The media frames may comprise at least a first set of media frames belonging to a lower coding layer (e.g., a base layer) and a second set of media frames belonging to a higher coding layer (e.g., an enhancement layer).

The play-out sequence of the media frames may be defined by any numbering or ordering among the media frames. As an example, the media frames or their transport units may be associated with (e.g., comprise) individual sequence numbers, so that the play-out sequence of the media frames may be determined from the sequence numbers.

Identifying a media frame for transmission via the radio interface may be performed in various ways. As an example, a preceding media frame may be identified, or determined, that is transmitted via the radio interface or that is scheduled for transmission via the radio interface. Next, a media frame following the preceding media frame may be determined from the media frame play-out sequence (e.g., on a sequence number basis). That following media frame may then be identified for transmission via the radio interface.

There exist various options for determining that the identified media frame is unavailable. As an example, it may be determined that the identified media frame has not (yet) been received (e.g., buffered) at the radio access network.

In one implementation the step of determining that the identified media frame is unavailable comprising starting at least one timer and determining that the identified media frame has not yet been received upon expiry of the timer. The timer may be started upon transmitting the preceding media frame via the radio interface. Alternatively, the timer may be started upon a scheduled transmission time of the preceding media frame. The latter variant does not necessarily require that the preceding media frame has actually been received at or transmitted by the radio access network.

The timer may generally be indicative of a scheduling delay (e.g., in terms of a maximum scheduling delay). Different timer settings, and in particular different scheduling delays, may be associated with media frames of different coding layers. In such a manner, a DiffServ-like mechanism may be implemented in the radio access network such that media frames of higher importance are associated with a lower scheduling delay than media frames of lower importance.

In one variant, the at least one timer may adaptively be set. As an example, the timer may adaptively be set based on at least one performance metric. The performance metric may individually be determined per coding layer (e.g., per associated QoS class). In such a variant, an individual timer per set of media frames belonging to particular coding layer may be provided.

The at least one performance metric may take various forms. As an example, one or more of the following performance metrics may be used for timer setting purposes: a condition of a radio channel (e.g., towards the user terminal), delay or jitter (e.g., towards the radio access network), a media frame reception rate at the radio access network (e.g., from a transport network via which the radio access network is coupled to a media server), a fill-level of a media frame buffer (e.g., of the user terminal or at the access network), a media frame play-out rate at the user terminal, and a relationship between the media frame reception rate at the radio access network and the media frame play-out rate at the user terminal.

The method may also comprise buffering the received media frames in a buffer of the radio access network. In such a case excluding the at least one dependent media frame from transmission may comprise discarding the at least one dependent media frame in the buffer. In case the radio access network is configured to schedule the media frames for transmission via the radio interface (e.g., to schedules transport unit transmission such as transmission of packets comprising the media frames), the discarding operation with respect to an individual dependent media frame may be performed prior to the scheduling operation. Unnecessary scheduling operations may thus be avoided.

The media frames may be received in-order or out-of-order at the radio access network. In case the media frames are received out-of-order, the received media frames may be re-ordered in the buffer.

The buffer may have a buffer size. The buffer size may be adjusted dependent on one or more parameters. Such parameters may comprise one or both of a scheduling delay for media frames and at least one performance metric. The scheduling delay may be represented by a timer setting as explained above. Also various examples for the at least one performance metric have been explained above. As further explained above, the scheduling delay and/or the at least one performance metric may individually be determined for individual coding layers.

In one variant the received media frames are buffered in at least two queues (wherein each queue buffers the media frames associated with at least one dedicated coding layer). The individual queues may be operated in accordance with an Active Queue Management (AQM). As an example, a size of an individual queue may be adjusted based on a scheduling delay and/or a performance metric associated with the media frames belonging to an individual queue.

The media frames may be received and/or transmitted in transport Protocol Data Unit (PDUs). The transport PDUs may be received and/or transmitted in data packets.

Also provided is a computer-program product comprising program code portions for performing the steps of any of the methods and method aspects disclosed herein when the computer-program product is executed on a computing device. The computer-program product may be stored on a computer-readable recording medium, such as a CD-ROM, DVD, or semiconductor memory. Also, the computer-program product may be provided for download via a wired or wireless network connection.

According to a further aspect an access network node configured to control transmission of layer-encoded media frames via a radio interface to a user terminal is provided, wherein the layer-encoding defines a decoding-dependency of the media frames. The access network node comprises an interface configured to receive layer-encoded media frames. Further, the access network node comprises a processing system configured to determine a decoding-dependency and a play-out sequence of the received media frames and to identify, from the media frame play-out sequence, a media frame for transmission via the radio interface. The processing system is also configured to determine that the identified media frame is unavailable, and to identify, from the media frame decoding-dependency, at least one media frame dependent from the unavailable media frame. The processing system is further configured to exclude the at least one dependent media frame from transmission via the radio interface.

The access network node, and in particular its processing system, may be configured to perform any of the methods and method steps disclosed herein. The processing system may be controlled on the basis of program code.

The access network node may further comprise a buffer configured to buffer the received media frames. The buffer may optionally be configured to comprise multiple queues. In the case multiple queues are provided in the buffer, each queue may buffer the media frames associated with at least one dedicated coding layer.

The access network node may also comprise a timer. In such a case the processing system may be configured to determine that the identified media frame is unavailable if the identified media frame has not yet been buffered upon expiry of the timer. As will be appreciated, an individual timer may be provided per set of media frames that belong to at least one dedicated coding layer.

The access network node may be configured as a Radio Base Station. As an example, the access network node may take the form of a NodeB or eNodeB.

Further provided is a network system comprising the access network node presented herein as well as a user terminal. The user terminal may be configured to signal at least one of a media frame play-out rate and a fill-level of a media frame buffer of the user terminal to the access network node. The access network node, in turn, may be configured to process the signalled information and to adapt at least one of a buffer size (e.g., in terms of a queue length) and a timer setting dependent thereon.

### Brief Description of the Drawings

Further aspects, advantages and details of the present disclosure will become apparent from the following description of exemplary embodiments and from the drawings, wherein:
- Fig. 1: shows a network system according to one aspect of the present disclosure;
- Fig. 2: shows an access network node and a user terminal according to one aspect of the present disclosure;
- Fig. 3: shows a flow diagram illustrating a method according to one aspect of the present disclosure;
- Fig. 4: shows a schematic diagram illustrating a frame dependency example;
- Fig. 5: shows a schematic diagram illustrating a re-ordering of a frame sequence due to different QoS levels being assigned to different coding layers;
- Fig. 6: shows a schematic diagram illustrating the discarding of a single frame due to late arrival; and
- Fig. 7: shows a schematic diagram illustrating the discarding of a dependent frame together with a frame that has arrived late.

### Detailed Description

In the following description of exemplary embodiments, for purposes of explanation and not limitation, specific details are set forth, such as particular arrangements, configurations, methods, functions and procedures, in order to provide a thorough understanding of the technique presented herein. It will be apparent to one skilled in art that this technique may be practiced in other embodiments that depart from those specific details. For example, while the following embodiments will primarily be described with a particular frame dependency configuration, it will apparent that the present disclosure could also be implemented in connection with other layer encoding approaches.

Moreover, those skilled in the art will appreciate that the methods, functions and procedures explained herein may be implemented using a software functioning in conjunction with a programmed processor, an Application-Specific Integrated Circuit (ASIP), a Digital Signal Processor (DSP) or general purpose computer. It will also be appreciated that while the following embodiments will primarily be described in the context of methods, systems and devices, the present disclosure may also be embodied in at least one computer program which can be loaded to run a computing device or a distributed computer system comprising one or more processors and one or more memories functioning as program storage. The one or more memories may be configured to store one or more computer programs that control the one or more processors to perform the methods, functions and procedures disclosed herein.

Layer encoding techniques have long been used for adaptive media transmissions in view of varying network conditions and to support a heterogeneous media client landscape. Today, layer encoding is mostly applied to video-based media data, such as unicast or multicast video streaming or multicast video conferencing.

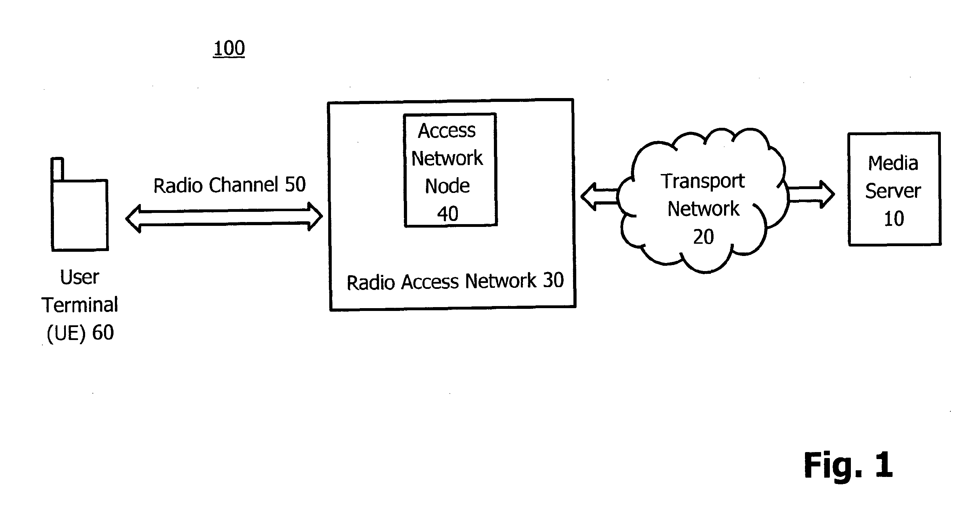

Fig. 1 schematically shows a network system 100 configured to deliver layer-encoded media frames generated by or stored at a media server 10 via a transport network 20 to a radio access network 30 with an access network node 40. The radio access network 30 transmits the layer-encoded media frames via a radio channel, or air interface, 50 to one or more user terminals 60 acting as media clients. It should be noted that from the perspective of the media server 10 and the media clients 60, the transport network 20 and the radio access network 30 together form a larger transport network with a first transport section defined by the transport network 20 and a second transport network section defined by the radio access network 30.

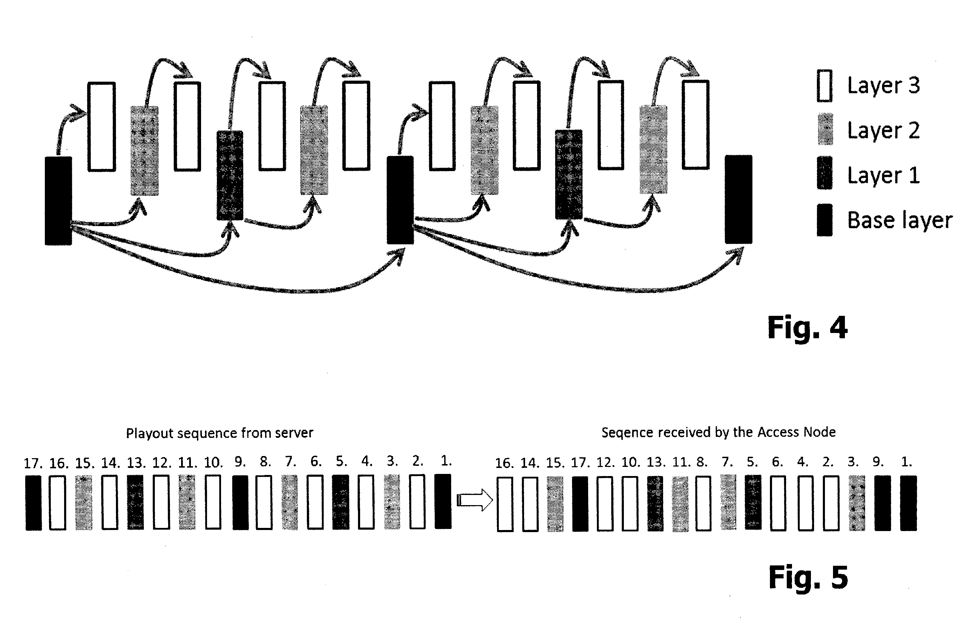

The media server 10 is configured to provide media frames conforming to any layer encoding protocol, such as H.264 or Multiview Video Coding (MVC). The resulting layer-encoded media frames will define two or more coding layers as will be discussed in more detail below with exemplary reference to Fig. 4.

The transport network 20 is configured to transport the layer-encoded media frames from the media server 10 to the radio access network 30. The transport network 20 may be realized as a wired or a wireless network. Also, the transport network 20 may comprise both wired and wireless network sections. As an example, the transport network 20 may comprise one or more of the Internet, a wireless network section (e.g., a satellite section), a proprietory network section, and so on.

The transport network 20 may be configured as a DiffServ network that transports media frames of different coding layers at different QoS levels. Those QoS levels may generally be selected such that media frames of higher importance are transported at a higher QoS level than media frames of lower importance.

The radio access network 30 may be realized on the basis of cellular or non-cellular systems. In the exemplary case of a cellular telecommunications technique, the access network node 40 may be realized as a Radio Base Station (RBS). Thus, in case the radio access network 30 complies to the Long Term Evolution (LTE) standard, the access network node 40 may be realized as an eNodeB. In case the radio access network 30 complies to the Universal Mobile Telecommunications System (UMTS) standard, the access network node 40 may be realized as a NodeB.

The user terminal 60, also referred to as User Equipment (UE) or media client herein, may be a stationary or a non-stationary device. As an example, the user terminal 60 may be configured as a smartphone, a laptop computer or a tablet computer. Although Fig. 1 only shows a single user terminal 60, the present disclosure is not limited to be implemented in a unicast media frame transmission scenario. Rather, the present disclosure could also be practiced in a multicast or broadcast scenario in which the layer-encoded media frames are transmitted from the media server 10 to multiple user terminals 60 at the same time.

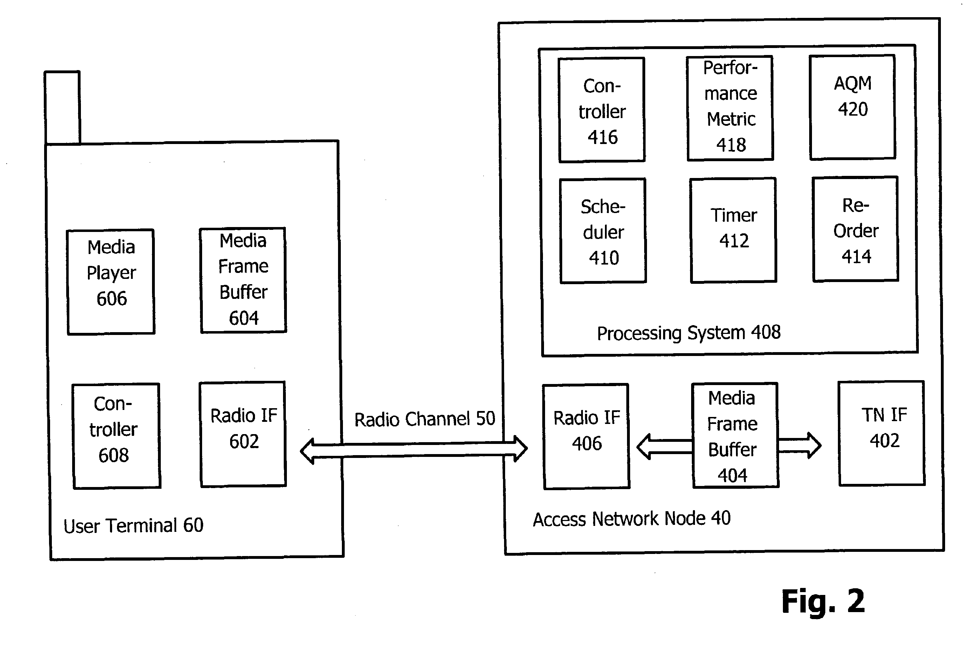

Fig. 2 illustrates the internal configuration of the user terminal 60 and the access network node 40 in more detail. As shown in Fig. 2, the access network node 40 comprises an interface 402 to the transport network 20 (not shown in Fig. 2). The access network node 40 further comprises a media frame buffer 404 coupled to the transport network interface 402. The media frame buffer 404 is configured to buffer the layer-encoded media frames received via the transport network interface 402. Further, the access network node 40 comprises a radio interface 406 configured to transmit the buffered layer-encoded media frames via the radio channel 50 to the user terminal 60. As explained above, the radio interface 406 may, for example, conform to the UMTS or LTE standard.

The access network node 40 further comprises a processing system 408. The processing system 408 is coupled to the transport network interface 402, the media frame buffer 404 and the radio interface 406 and is operable to control operations thereof.

The processing system 408 will typically comprise one or multiple processors as well as a memory configured to store program code that controls the operation of one or more processors. The program code may be configured to define multiple software components, such as a scheduler 410, a timer 412, a re-ordering component 414, a controller 416, an acquisition component for at least one performance metric 418, and a component for Active Queue Management (AQM) 420. It will be appreciated that one or more of the components 410 to 420 could alternatively be realized as hardware components or as a combination of software and hardware components within the processing system 408.

Still referring to Fig. 2, the user terminal 60 comprises a radio interface 602 in accordance with the communications standard supported by the radio interface 406 of the access network node 40. As such, the radio interface 602 may, for example, conform to the LTE or UMTS standard.

Further, the user terminal 60 comprises a media frame buffer 604 coupled to the radio interface 602. The media frame buffer 604 is configured to buffer the layer-encoded media frames transmitted over the radio channel 50 and received via the radio interface 602. The size of the media frame buffer 604 may be selected to be large enough to queue up a number of media frames in case the frame arrival rate at the user terminal 60 is faster than the play-out rate of the media player 606.

Further, a media player 606 with access to the media frame 604 is provided at the user terminal 60. The media player 606 is configured to decode the layer-encoded media frames buffered in the media frame buffer 604 and to render the decoded media frames at a user interface (not shown) of the user terminal 60. The user terminal 60 also comprises a controller 608 configured to control operations of the radio interface 602, the media frame buffer 604 and the media player 606.

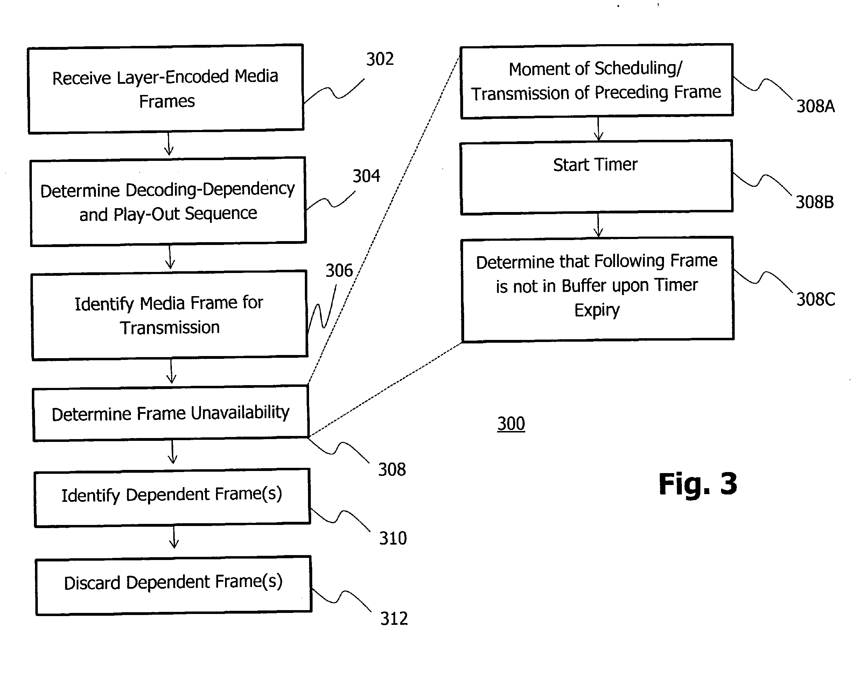

In the following the operation of the network entities illustrated in Fig. 1 and of their components illustrated in Fig. 2 will be described in more detail with reference to the flow diagram 300 of Fig. 3 as well as with reference to the schematic media frame processing diagrams illustrated in Figs. 4 to 7.

In step 302 the access network node 40 receives, at the transport network interface 402, layer-encoded media frames. The layer-encoded media frames may, for example, be received in the form of a video stream. The layer-encoded media frames exhibit a specific decoding-dependency from the perspective of the user terminal 60 (which is equivalent to a corresponding encoding-dependency from the perspective of the media server 10).

Fig. 4 schematically illustrates an exemplary decoding-dependency on the basis of four decoding layers including a base layer and three enhancement layers (coding layer 1 to coding layer 3). In Fig. 4, each media frame is shown in the form of a box. The black boxes correspond to media frames that constitute a base layer. Rendering of the base layer media frames by the user terminal 60 will result in a low-quality media (e.g., video) perception. The media perception quality will successively increase upon decoding (and rendering) also the media frames of coding layer 1, coding layer 2 and coding layer 3.

As shown in Fig. 4, the media frames of coding layer 3 exhibit a (de)coding dependency on media frames from coding layer 2, which in turn exhibit a (de)coding dependency on media frames from coding layer 1. Media frames from coding layer 1, in turn, exhibit a (de)coding dependency on media frames from the base layer. This means, for example, that media frames from coding layer 3 can only be fully decoded (and rendered) if also the dependent media frames from coding layer 2, coding layer 1 and base layer have been received and decoded.

The media server 10 typically hands over the layer-encoded media frames in their correct play-out sequence (at user terminal 60) to the transport network 20 as shown on the left hand side of Fig. 5. As becomes apparent from Fig. 5, each media frame is associated with a sequence number, which means that the media frame with sequence number 1 will be played-out first by the media player 606 of the user terminal 60, followed by the media frame with sequence number 2, and so on.

As explained above, the transport network 20 may apply a DiffServ mechanism to protect one or more coding layers of higher importance, such as the base layer. This means that base layer media frames may be transported with a higher QoS level in the transport network 20 (e.g., by a radio access network over an air interface section of the transport network 20) than layer 3 media frames. Additionally, or in the alternative, a DiffServ mechanism may also be applied within the radio access network 30 to protect one or more coding layers of higher importance, such as the base layer.

Since media frames of different coding layers are thus transmitted at different QoS levels in the transport network 20, media frames belonging to higher coding layers will typically suffer from higher jitter, longer delay and higher delay variance than media frames belonging to lower media layers. As a result, the media frame sequence received at the transport network interface 402 of the access network node 40 will differ from the play-out sequence of the media frames. This is illustrated on the right hand side of Fig. 5.

The out-of-order reception of the layer-encoded media frames at the transport network interface 402 is one reason for the provision of the media frame buffer 404. Specifically, the media frame buffer 404 permits a re-ordering of the received media frames by the re-ordering component 414 prior to their forwarding via the radio interface 406 to the user terminal 60. Also, the utilization of the radio channel 50 can be improved by excluding buffered media frames from transmission via the radio interface 406 as will be described in more detail below.

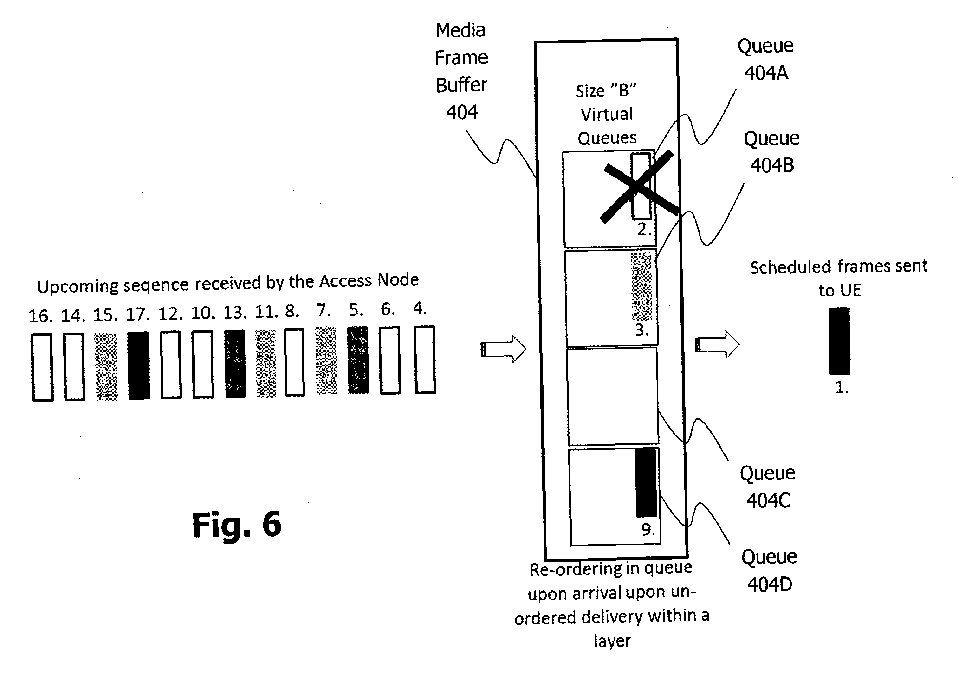

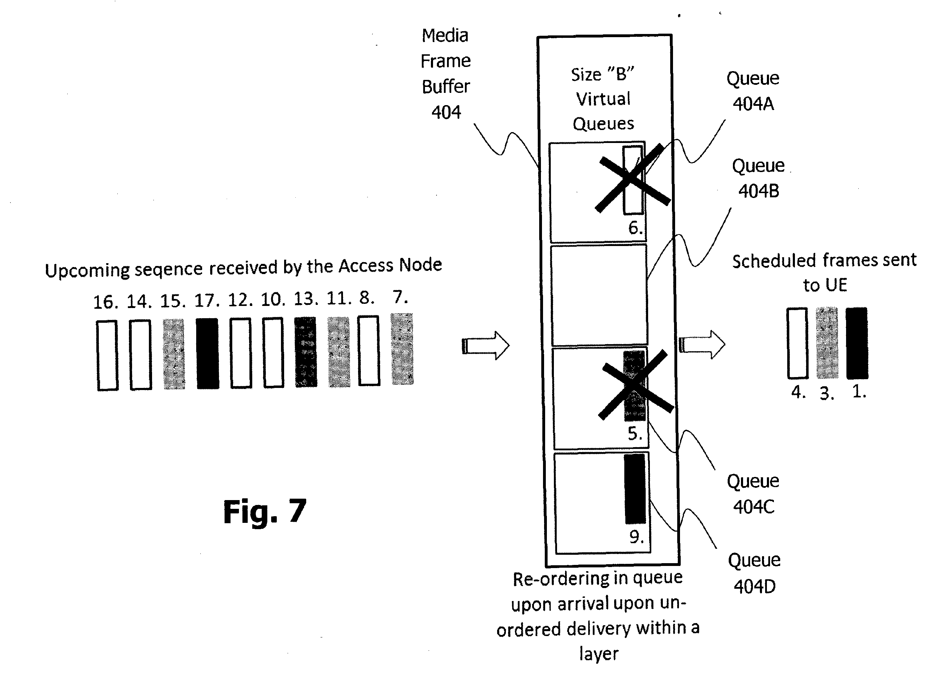

The media frame buffer 404 is organized to comprise multiple buffer queues 404A to 404D as illustrated in Figs. 6 and 7. Specifically, an individual queue 404A to 404D is provided for the media frames of each individual coding layer. Since in the coding example of Fig. 4 four coding layers are used, the media frame buffer 404 in the example of Figs. 6 and 7 has a corresponding number of four buffer queues 404A to 404D. The queues 404A to 404D may be realized in the form of virtual queues in the buffer 404. The active queue management component 420 of Fig. 2 is in charge of managing the queues 404A to 404D.

It will be appreciated that the number of buffer queues 404A to 404D may generally depend on the number of coding layers. It will also be appreciated that in certain variants the media frames of two or more coding layers may be buffered in a single queue 404A to 404D.

Media frame re-ordering by the re-ordering component 414 as well as placement of the individual media frames into the associated buffer queues 404A to 404D requires an initial analysis of the media frames received at the transport network interface 402 with respect to their decoding-dependency as well as with respect to their play-out sequence. This analysis is performed in step 304 of flow diagram 300.
The analysis in step 304 may be performed by the controller 416 in Fig. 2. The controller 416 may also, in an initial step, determine that the data received at the transport network interface 402 actually pertain to media frames (e.g., to a video stream). The controller 416 may to this end analyse a bearer type or an Internet Protocol (IP) address associated with the ongoing data reception operation at the transport network interface 402. This determination may involve Deep Packet Inspection (DPI).

At least one of decoding-dependency information and play-out sequence information could be directly signalled by the media server 10 to the access network node 40. As an example, a meta file (such as a media manifest file) generated by the media server 10 may contain such information. Alternatively, the access network node 40 could apply DPI to obtain at least one of the required frame dependency-information and play-out sequence information.

The play-out sequence of the received media frames may be determined in step 304 based on the position of an individual media frame within the media frame sequence generated by the media server 10. The play-out sequence may, for example, be derived based on sequence numbers associated with the received media frames. If, for example, the media frames are received in packets, the sequence number may be placed in a packet header. As an example, if the Real-time Transport Protocol (RTP) is used for packet transmission, the RTP header may be inspected to that end. Media frame sequence information could alternatively be derived by DPI.

The play-out sequence information will, *inter alia,* be used to place the received media frames in their correct order in the respective queues 404A to 404D by the re-ordering component 414. To identify the correct queue 404A to 404D in which an individual media frame is to be placed, the decoding-dependency will also be determined in step 304. In other words, the controller 416 needs to determine the coding layer to which an individual media frame belongs to.

The decoding-dependency of the media frames may be determined in various ways. As an example, a pre-defined decoding layer identifier may be placed and signalled in the header of a packet used for media frame transport (e.g., an RTP header). In case different coding layers belong to different multicast groups, also the IP multicast address may be analysed by the controller 416 to determine the media frame decoding-dependency. Still further, port numbers on which or from which the media frames are received or the applied QoS level used for transmission of the media frames of an individual coding layer (e.g., the applied Differentiated Services Code Points, DSCP, values) may be analysed.

Based on the decoding-dependency and the play-out sequence determined in step 304, the controller 416 and the re-ordering component 414 place each received media frame in the appropriate queue 404A to 404D and, within each queue 404A to 404D, in the correct order.

The media frames may in one variant be received at the transport network interface 402 in the form of transport Protocol Data Units (PDUs). If fragmentation occurs in the transport network 20, a single media frame may be transmitted in several transport PDUs. In such a case the term media frame always refers to a set of fragments that are handled together in the proper fragment order.

Then, in step 306, the scheduler 410 identifies from the media frame play-out sequence a media frame that is to be scheduled for transmission via the radio interface 406 to the user terminal 60. In this regard, the scheduler 410 at first identifies a preceding media frame that has been transmitted via the radio interface 406 or is currently scheduled for transmission via the radio interface 406. Then, the scheduler 410 determines from the media frame play-out sequence the media frame following the preceding media frame. If, for example, the preceding media frame is associated with sequence number *n,* the following media frame identified for transmission via the radio interface 406 will have the sequence number *n+1* (see left-hand side of Fig. 5). In step 306 the scheduler 410 may further determine a scheduled transmission time for the identified media frame.

Once a media frame has been identified for transmission via the radio interface 406 in step 306, the scheduler 410 may trigger that the identified media frame is delivered from the media frame buffer 404 to the radio interface 406 for transmission to the user terminal 60. On that occasion, the scheduler 410 may determine that the identified media frame has not yet been buffered. In other words, the scheduler 410 may determine that the identified media frame is unavailable (step 308).

In one optional realization, the scheduler 410 may be configured to determine frame unavailability in step 308 at the latest if the identified media frame has not been buffered after a scheduling delay defined by expiry of the timer 412. That is, the scheduler 410 may be configured to wait at most for a time period defined by the scheduling delay for a late-coming media frame as indicated by optional steps 308A, 308B and 308C in Fig. 3.

In step 308A, the scheduler 310 determines an appropriate point in time for starting the timer 412 in step 308B. As an example, the scheduler 410 may start the timer 412 upon transmission of the preceding media frame via the radio interface 406 to the user terminal 60 or, alternatively, at the point in time at which the preceding media frame is scheduled for transmission. In case the scheduler 410 determines that the identified media frame (e.g., the media frame following the preceding media frame in the play-out sequence) has not been buffered upon expiry of the timer 412 in step 308C, unavailability of that frame is determined.

The timer 412, and thus the scheduling delay, may have a fixed value or may be adaptively set. As an example, the scheduling delay may generally range between approximately 50 msec and 2 sec. In one variant, the scheduling delay is adaptively set by the controller 416, for example, after each scheduling or frame transmission event. When the scheduling delay is adaptively set, the scheduling delay may have an initial value of approximately 500 msec.

The scheduling delay may be adjusted over time based on the fill-level of the media frame buffer 404 of the access network node 40 or any other performance metric. The controller 416 may generally be configured to adaptively set the timer 412 based on at least one performance metric measured or otherwise determined by the acquiring component 418 in Fig. 2. The at least one performance metric may generally include one or more of a condition of the radio channel 50 to the user terminal 60, a media frame reception rate at the radio access network 30, a fill-level of the media frame buffer 604 of the user terminal 60, a media frame play-out rate at the user terminal 60, a relationship between the media frame reception rate at the radio access network 30 and the media frame play-out rate at the user terminal 60, and so on. The controller 608 of the user terminal 60 may be configured to signal one or both of the media frame play-out rate and the fill-level of the media frame buffer 604 to the controller 416 of the processing system 408 in the access network node 40 (see Fig. 2).

In one example, the controller 416 increases the scheduling delay if the media frames arrive at the radio access network 30 over the transport network 20 faster than the play-out rate at the user terminal 60 requires. The average scheduling delay over the total media frame streaming period may have an upper threshold corresponding to the media frame play-out rate at the user terminal 60 (e.g., typically 25 frames-per-second, fps).

In another example that may be combined with the first example, the scheduling delay is decreased whenever the measured quality of the radio channel 50 degrades. In such a case, the level of user-perceived quality of the media frame rendering can be maintained. Decreasing the scheduling delay allows all available media frames to be "pushed" to the media frame buffer 604 of the user terminal 60 in a greedy way. The decreased scheduling delay may be kept until the radio channel conditions become better. In one variant, the scheduling delay may be decreased to zero (e.g., unconditionally or in case of particularly bad radio channel conditions). In another variant, the scheduling delay is decreased in a "non-binary" manner (e.g., gradually or step-wise). As an example, various radio channel quality levels may be defined, and to each quality level a certain scheduling delay may be associated. Lower quality levels may be associated with shorter scheduling delays.

It will be appreciated that the entire media frame buffer 404 of the access network node 40 (e.g., all queues 404A to 404D) may be associated with the same scheduling delay. In such a case a single timer 412 will suffice. Alternatively, individual queues 404A to 404D or individual queue sets may be associated with a dedicated scheduling delay. In such a case multiple timers 412 may be provided. The performance metric may then be determined individually per coding layer (e.g., per associated QoS class) to adaptively derive a corresponding timer setting for the associated queue 404A to 404D.

It should be noted that also the size of the media frame buffer 404 of the access network node 40 may adaptively be set. The buffer size setting may depend on the scheduling delay and/or the at least one performance metric. Various performance metric examples have already been discussed above. Of course, the AQM component 420 may also adaptively adjust the length of each queue 404A to 404D dependent on the scheduling delay and/or the at least one performance metric. As an example, the size of the queues 404A to 404D may adaptively be set based on the measured delay or the assigned QoS class (assuming that different QoS classes have been assigned to the various coding layers as explained above). Measuring of the performance metric may generally be performed using an active measurements protocol such as TWAMP (see, e.g., RFC 5357).

Now returning to Fig. 3, dependent frames are identified in step 310 in case it has been found in step 308 that a media frame presently scheduled for transmission via the radio interface 406 is unavailable. The identifying step 310 may be performed by the controller 416.

As explained above, one or more media frames dependent from the unavailable media frame may be identified from the media frame decoding-dependency determined earlier in step 304. Fig. 4 exemplarily indicates by arrows the decoding-dependency among 17 layer-encoded media frames.

Then, in step 312, the controller 416 excludes the one or more dependent media frames identified in step 310 from transmission via the radio interface 406. As an example, the controller 416 may discard the one or more dependent media frames in the media frame buffer 404. This discarding step is performed prior to a scheduling of the media frames to be discarded by the scheduler 310. As such, unnecessary scheduling operations are avoided.

Steps 310 and 312 in Fig. 3 will now be explained in more detail based on the schematic diagrams in Figs. 6 and 7. With reference to Fig. 6 it is assumed that frame 2 arrives late (e.g., after expiry of the associated scheduling delay).

It is thus determined in step 308 that frame 2 is unavailable. However, in step 310 no dependent frame will be identified for frame 2 as frame 2 belongs to the highest coding layer (layer 3). Since no dependent frame could be identified in step 310, no dependent frame will be discarded in step 312. However, frame 2 that has arrived late will be discarded, or dropped.

A different situation is illustrated in Fig. 7. At a given scheduling instance, frame 5 is scheduled for delivery via the radio interface 406 to the user terminal 60. However, frame 5 arrives late (e.g., after expiry of the associated scheduling delay) in the media frame buffer 404. Dependent frame 6 is already in queue 404A by this time (see arrival sequence in Fig. 5). Thus, upon determination of unavailability of frame 5 in step 308, it will be determined in step 310 that there exists one media frame 6 dependent from media frame 5. It will also be determined that this media frame 6 is already buffered in queue 404A. In such a case, dependent frame 6 will be discarded in step 312 together with the associated media frame 5 from the queues 404A and 404C. The scheduler 410 then moves on to media frame 7 and schedules it for transmission via the radio interface 406, assuming it will arrive with a time advance.

As becomes apparent from the scenarios illustrated in Figs. 6 and 7, the access network node 40 may be configured to schedule to the radio interface 406 only buffered media frames which are not outdated and which are not dependent on an outdated media frame. The scheduling is performed on the basis of an optional scheduling delay that may be configured to be the same for all the queues 404A to 404D that may be configured or independently for each queue 404A to 404D. The scheduling delay may be adjusted according to various items of performance metrics, such as the measured conditions of the radio channel 50 or an arrival frame rate from the transport network 20. Also the size of the media frame buffer 404 and/or of the queues 404A to 404D may be adjusted according to one or more performance metrics.

The buffering/queuing of the media frames at the radio access network 30 permits to overcome jitter, delay and delay variation issues introduced by the (e.g., packet-switched) transport network 20, while also taking into consideration the radio conditions on the last transmission hop from the radio access network 30 to the one or more user terminals 60. Delay, delay variation and jitter may be determined per coding layer, and the buffer/queuing may be controlled accordingly.

With the technique presented herein, in certain variants the gains of layered media transport in a DiffServ-like transport network 20 can further be increased. Additionally, an optimized last-hop transmission to user terminals 60 can be achieved. The technique improves end-user perceived quality by enabling a shorter buffer size on the side of the user terminal 60 and by enabling a higher media rendering quality due to smart frame discarding based on frame dependency information. Furthermore, radio interface efficiency is improved by removing outdated buffered frames already before scheduling them to the radio channel 50. The end-user perceived quality can thus be improved even under degraded radio channel conditions. Moreover, dynamic buffer adjustments based on active network performance measurements (and based on an associated performance metric) permit to handle QoS level variations in the transport network 20.

Also, the network operator gains additional control over media frame transmission. As an example, the network operator can better predict radio interface utilization and may throttle the last-hop media transmission via the AQM component 420 or manual queue configuration.

Modifications and other realizations of the disclosed embodiments will come to mind to one skilled in the art having the benefit of the teachings presented in the foregoing description and the associated drawings. Therefore, it is to be understood that the embodiments are not to be construed to limit the present disclosure, and that modifications and other embodiments are intended to be included within the scope of the claims that follow.

## Claims

1. A method of controlling transmission of layer-encoded media frames via a radio interface (406) to a user terminal (60), wherein the layer-encoding defines a decoding-dependency of the media frames, the method comprising:
receiving (302) layer-encoded media frames at a radio access network (30);
determining (304), at the radio access network (30), a decoding-dependency and a play-out sequence of the received media frames;
identifying (306), from the media frame play-out sequence, a media frame for transmission via the radio interface (406);
determining (308) that the identified media frame is unavailable;
identifying (310), from the media frame decoding-dependency, at least one media frame dependent from the unavailable media frame; and
excluding (312) the at least one dependent media frame from transmission via the radio interface (406).

2. The method of claim 1, wherein
identifying (310) a media frame for transmission via the radio interface (406) comprises:
identifying a preceding media frame that is one of transmitted and scheduled for transmission via the radio interface (406);
determining, from the media frame play-out sequence, a media frame following the preceding media frame; and
identifying the following media frame for transmission via the radio interface (406).

3. The method of any of the preceding claims, wherein
determining that the identified media frame is unavailable comprises:
starting (308B) a timer (412); and
determining (308C) that the identified media frame has not yet been received upon expiry of the timer (412).

4. The method of claims 2 and 3, wherein
the timer (412) is started upon one of:
transmitting (308A) the preceding media frame via the radio interface (406); and
a scheduled transmission time of the preceding media frame.

5. The method of claim 4, further comprising
adaptively setting the timer (412) based on at least one performance metric (418).

6. The method of any of the preceding claims, further comprising
buffering the received media frames in a buffer (404) of the radio access network (30).

7. The method of claim 6, wherein
excluding the at least one dependent media frame from transmission comprises discarding (312) the at least one dependent media frame in the buffer (404).

8. The method of claim 6 or 7, wherein
the buffer (404) has a buffer size, and further comprising adjusting the buffer size dependent on at least one of:
a scheduling delay (412) for media frames; and
at least one performance metric (418).

9. The method of any of any of the preceding claims, further comprising
buffering the received media frames in at least two queues (404A to D), wherein each queue (404A to D) buffers the media frames associated with at least one dedicated coding layer.

10. The method of any of the preceding claims, wherein
the media frames are at least one of received and transmitted in transport protocol data units, PDUs.

11. A computer-program product comprising program code portions for performing the steps of any of the preceding claims when the computer-program product is executed on a computing device.

12. An access network node (40) configured to control transmission of layer-encoded media frames via a radio interface (406) to a user terminal (60), wherein the layer-encoding defines a decoding-dependency of the media frames, the access network node (40) comprising:
an interface (402) configured to receive (302) layer-encoded media frames;
a processing system (408) configured to:
determine (304) a decoding-dependency and a play-out sequence of the received media frames;
identify (306), from the media frame play-out sequence, a media frame for transmission via the radio interface (406);
determine (308) that the identified media frame is unavailable;
identify (310), from the media frame decoding-dependency, at least one media frame dependent from the unavailable media frame; and
exclude (312) the at least one dependent media frame from transmission via the radio interface (406).

13. The access network node of claim 12, further comprising
a buffer (404) configured to buffer the received media frames; and
a timer (412), wherein the processing system (408) is configured to determine (308C) that the identified media frame is unavailable if the identified media frame has not yet been buffered upon expiry of the timer (412).

14. The access network node of claim 12 or 13, wherein
the access network node (40) is configured as a radio base station.

15. A network system (100) comprising the access network node (40) of any of claims 12 to 14 and a user terminal (60), wherein the user terminal (60) is configured to signal at least one of a media frame play-out rate and a fill level of a media frame buffer (604) of the user terminal (60) to the access network node (40).

## Amended claims

### Amended claims in accordance with Rule 137(2) EPC.

1. A method of controlling transmission of layer-encoded media frames via a radio interface (406) to a user terminal (60), wherein the layer-encoding defines a decoding-dependency of the media frames, the method comprising:
receiving (302) layer-encoded media frames at a radio access network (30);
determining (304), at the radio access network (30), a decoding-dependency and a play-out sequence of the received media frames;
identifying (306), from the media frame play-out sequence, a media frame for transmission via the radio interface (406);
determining (308) if the identified media frame is unavailable at the radio access network (30);
in case the identified media frame is determined to be unavailable, the method further comprises:
identifying (310), from the media frame decoding-dependency, at least one media frame dependent from the unavailable media frame; and
excluding (312) the at least one dependent media frame from transmission via the radio interface (406).

2. The method of claim 1, wherein
identifying (310) a media frame for transmission via the radio interface (406) comprises:
identifying a preceding media frame that is one of transmitted and scheduled for transmission via the radio interface (406);
determining, from the media frame play-out sequence, a media frame following the preceding media frame; and
identifying the following media frame for transmission via the radio interface (406).

3. The method of any of the preceding claims, wherein
determining that the identified media frame is unavailable comprises:
starting (308B) a timer (412); and
determining (308C) that the identified media frame has not yet been received upon expiry of the timer (412).

4. The method of claims 2 and 3, wherein
the timer (412) is started upon one of:
transmitting (308A) the preceding media frame via the radio interface (406); and
a scheduled transmission time of the preceding media frame.

5. The method of claim 4, further comprising
adaptively setting the timer (412) based on at least one performance metric (418).

6. The method of any of the preceding claims, further comprising
buffering the received media frames in a buffer (404) of the radio access network (30).

7. The method of claim 6, wherein
excluding the at least one dependent media frame from transmission comprises discarding (312) the at least one dependent media frame in the buffer (404).

8. The method of claim 6 or 7, wherein
the buffer (404) has a buffer size, and further comprising adjusting the buffer size dependent on at least one of:
a scheduling delay (412) for media frames; and
at least one performance metric (418).

9. The method of any of any of the preceding claims, further comprising buffering the received media frames in at least two queues (404A to D),
wherein each queue (404A to D) buffers the media frames associated with at least one dedicated coding layer.

10. The method of any of the preceding claims, wherein
the media frames are at least one of received and transmitted in transport protocol data units, PDUs.

11. A computer-program product comprising program code portions for performing the steps of any of the preceding claims when the computer-program product is executed on a computing device.

12. An access network node (40) configured to control transmission of layer-encoded media frames via a radio interface (406) to a user terminal (60), wherein the layer-encoding defines a decoding-dependency of the media frames, the access network node (40) comprising:
an interface (402) configured to receive (302) layer-encoded media frames;
a processing system (408) configured to:
determine (304) a decoding-dependency and a play-out sequence of the received media frames;
identify (306), from the media frame play-out sequence, a media frame for transmission via the radio interface (406);
determine (308) if the identified media frame is unavailable at the radio access network (30);
in case the identified media frame is determined to be unavailable, the processing system is further configured to:
identify (310), from the media frame decoding-dependency, at least one media frame dependent from the unavailable media frame; and
exclude (312) the at least one dependent media frame from transmission via the radio interface (406).

13. The access network node of claim 12, further comprising
a buffer (404) configured to buffer the received media frames; and
a timer (412), wherein the processing system (408) is configured to determine (308C) that the identified media frame is unavailable if the identified media frame has not yet been buffered upon expiry of the timer (412).

14. The access network node of claim 12 or 13, wherein
the access network node (40) is configured as a radio base station.

15. A network system (100) comprising the access network node (40) of any of claims 12 to 14 and a user terminal (60), wherein the user terminal (60) is configured to signal at least one of a media frame play-out rate and a fill level of a media frame buffer (604) of the user terminal (60) to the access network node (40).
